# EUROPEAN PATENT SPECIFICATION

(11) **EP 4 063 423 B1**
(45) Date of publication and mention of the grant of the patent: **03.01.2024**
(21) Application number: 21176652.2
(22) Date of filing: 28.05.2021
(51) Int. Cl.: C08G 18/76, C08G 18/64, C09D 175/04

(54) **METHOD FOR PREPARING AN ARTIFICIAL BOARD**
VERFAHREN ZUR HERSTELLUNG EINER KÜNSTLICHEN PLATTE
PROCÉDÉ DE PRÉPARATION D'UN PANNEAU ARTIFICIEL

(30) Priority: 24.03.2021 CN 202110316570
(43) Date of publication of application: 28.09.2022
(73) Proprietor: Covestro Deutschland AG, 51373 Leverkusen (DE)
(72) Inventor: Xiaojun, Gu, 200126 Pudong, Shanghai (CN); Liqiang, Li, 201206 Pudong, Shanghai (CN); Jian, Wang, 201203 Shanghai (CN)
(74) Representative: Levpat

(56) References cited:
- CN-A- 112 094 496

## Description

### Technical Field

The invention relates to a method for preparing an artificial board, the artificial board prepared by the method and the use thereof.

### Background

In the preparation of artificial boards, plant fibers are commonly used as raw materials in the industry, and polymeric isocyanates, phenolic resins, urea formaldehyde resins, vinyl acetate and lignin are used as adhesives. However, artificial boards made of plant fibers are prone to aging, partial or overall deformation, resulting in poor use effect and short service life. How to produce sturdy and durable formaldehyde-free artificial boards with high quality is a problem urgently to be solved in the industry. In addition, polyurethane foams are widely used, but they become solid wastes that are difficult to dispose after use, which is easy to cause pollution. How to turn waste into treasure is also a problem to be solved in the industry.

CN 104960064A discloses the preparation of an artificial board from an isocyanate and a graft polyol and lignocellulose, wherein the graft polyol comprises a continuous phase comprising isocyanate reactive components and a discontinuous phase comprising polymer particles (the polymer particles may be of SAN, urea, or polyurethane).

The adhesive system mentioned in US6841023B2 comprises a polyol, including polyester polyol and polyether polyol, a crude isocyanate and a small amount of blowing agent.

WO200708442A2 discloses a structural panel with three layers in the panel structure, wherein the core layer is of recycled polyurethane, thermal insulation foam, polyisocyanurate foam and the like. The two surface layers are of recycled energy-absorbing panels. Other materials include composite resins, cloths, adhesives, glass fibers and plastics. Carpet fibers, wood flour and waste paper can be used as fillers.

Despite the above disclosure, there is still an urgent need for a method for preparing durable artificial boards with high quality in the market.

### Summary of the invention

The first aspect of the present invention is to provide a method for preparing an artificial board, comprising preparing the artificial board by mixing fibers, polyurethane foam particles and a reaction system comprising
component A) isocyanate:
wherein the absolute dry weight of the polyurethane foam particles is 3-80% by weight, preferably 4-75% by weight, more preferably 5-70% by weight, particularly preferably 5-60% by weight, based on the total absolute dry weight of the fibers and the polyurethane foam particles.

Preferably, the polyurethane foam particles comprise recycled polyurethane foam, preferably recycled polyurethane rigid foam, polyurethane flexible foam, polyurethane semi-rigid foam or a combination thereof, and more preferably recycled polyurethane rigid foam.

Preferably, the content of component A) isocyanate is 1-20% by weight, preferably 1-15% by weight, more preferably 1-10% by weight, based on the total absolute dry weight of the fibers and the polyurethane foam particles.

Preferably, the fibers are selected from plant fibers with a water content of 7-40% by weight, preferably 7-30% by weight, more preferably 7-25% by weight, based on the total absolute dry weight of the plant fiber.

Preferably, the thickness expansion rate after water absorption for 24 hours of the artificial board is ≤ 11%, preferably ≤ 10%, more preferably ≤ 9% (test method: GB/T17657-2013).

Preferably, the thickness expansion rate after water absorption for 24 hours of the artificial board comprising the polyurethane foam particles is reduced by ≥ 20%, preferably ≥ 30 %, more preferably ≥ 35% (test method: GB/T17657-2013), compared with that of the artificial board without the polyurethane foam particles. Specifically, the reduced value of the thickness expansion rate after water absorption for 24 hours is (y-x)/y%, if the thickness expansion rate after water absorption for 24 hours of the artificial board comprising the polyurethane foam particles is x, and that of the artificial board without the polyurethane foam particles is y.

Preferably, component A) isocyanate comprises
A1) 3.0-20% by weight, preferably 5.0-20% by weight, more preferably 7.0-20% by weight, particularly preferably 8.0-18% by weight of 2,2'-diphenylmethane diisocyanate, based on the total weight of component A);
A2) 26-48% by weight of polycyclic polymeric isocyanate, based on the total weight of component A);
wherein, the viscosity of component A) isocyanate is 50-160 mPa·s (25°C), preferably 60-150 mPa·s (25°C) (test method: GB/T 12009.3-2009).

Preferably, the method comprises a step of introducing the reaction system into a mold at an introduction speed of 1.2-25 kg/min, preferably 1.5-20 kg/min (the test method referring to the measurement by mass flow meter).

Preferably, component A) further comprises 4,4'-diphenylmethane diisocyanate in a content of ≤ 41% by weight, preferably 20-41% by weight, particularly preferably 28-37% by weight, based on the total weight of component A).

Preferably, component A) further comprises 2,4'-diphenylmethane diisocyanate in a content of ≤ 30% by weight, preferably 1-25% by weight, based on the total weight of component A).

Preferably, the yield of the artificial boards produced by the method is ≥ 7m³/h, preferably ≥ 10m³/h, more preferably ≥ 12m³/h (the test method referring to the volume calculation method).

The reaction system of the present invention may comprise a polyol or other additives, such as a catalyst. It may also comprise no polyol or other additives. Preferably, the reaction system of the present invention does not comprise a polyol. Preferably, the reaction system of the present invention does not comprise other additives. Unexpectedly, it is found that an aesthetic and durable artificial board with high quality and low thickness expansion rate after water absorption can be produced without adding a polyol or other additives. The method of the present invention not only simplifies the process, saves raw materials, but also turns waste into treasure, reduces pollution, and is more environmentally friendly.

Another aspect of the present invention is to provide an artificial board prepared by the aforementioned method for preparing an artificial board of the present invention.

Preferably, the thickness expansion rate after water absorption for 24 hours of the artificial board is ≤ 11%, preferably ≤ 10%, more preferably ≤ 9% (test method: GB/T17657-2013).

Preferably, the thickness expansion rate after water absorption for 24 hours of the artificial board comprising the polyurethane foam particles is reduced by ≥ 20%, preferably ≥ 30 %, more preferably ≥ 35% (test method: GB/T17657-2013), compared with that of the artificial board without the polyurethane foam particles.

Preferably, the density of the artificial board is 480-1400 kg/m³, preferably 500-860 kg/m³ (the test method referring to GB/T17657-2013).

Unexpectedly, it was found that the artificial boards prepared by the method for preparing an artificial board comprising a specific content of polyurethane foam of the present invention can not only meet the requirements on physical properties, but also unexpectedly reduce their thickness expansion rate after water absorption, so that the artificial board products are more aesthetic, durable, easy to handle and move, making it possible for a wider range of applications. In particular, the artificial boards comprising the recycled polyurethane foam develop an application field of the polyurethane foam that is difficult to recycle, thereby not only turning waste into treasure simply and cost-effectively, saving manpower and material resources, but also saving energy and reducing emissions, protecting the environment and contributing to the sustainable development for mankind.

Those of ordinary skill in the art know that isocyanates used as adhesives or other raw materials usually contain isomers such as 4,4'-diphenylmethane diisocyanate, 2,4'-diphenylmethane diisocyanate and 2,2'-diphenylmethane diisocyanate. Whether in laboratory application or industrial production, the content of 4,4'-diphenylmethane diisocyanate in the isocyanates is usually very high, and in some cases even more than 50% by weight, which ensures its reactivity. Among all isomers, 2,2'-diphenylmethane diisocyanate has the lowest activity. For example, WO2007/087987 indicated: "Among the monomer diphenylmethane diisocyanates, 4,4'-isomer and 2,4'-isomer are dominant due to the synthesis. The 2,2'-isomer, which exists in a small amount and is basically of no industrial value, is also formed to a lower degree." This is partly due to the fact that pure 2,2'-diphenylmethane diisocyanate cannot be used industrially and isocyanates containing 2,2'-diphenylmethane diisocyanate usually have the disadvantage of very slow reaction, so that the reaction is incomplete.

However, various isomers are inevitably formed in the synthesis of isocyanates. Therefore, 2,2'-diphenylmethane diisocyanate is often incinerated as waste, which causes great waste and environmental pollution. However, 4,4'-diphenylmethane diisocyanate and 2,4'-diphenylmethane diisocyanate are expensive due to their higher activity.

By repeated experiments, it was unexpectedly found that by using a reaction system comprising isocyanate with a certain viscosity and comprising an appropriate content of 2,2'-diphenylmethane diisocyanate can not only produce a formaldehyde-free artificial board with excellent quality, but also improve the yield and production efficiency. Moreover, a stable reaction speed can be ensured without a catalyst, which can optimize the process and save resources. In addition, the amount of high-priced 4,4'-diphenylmethane diisocyanate and 2,4'-diphenylmethane diisocyanate and/or polymeric isocyanate that are usually used in a large amount in the prior art is correspondingly reduced, which saves costs, and is more economical and environmentally friendly.

The viscosity of the isocyanate adhesive used in the preparation of artificial boards in the industry is usually 170-230 mPa·s (25°C), and the viscosity of some specially modified isocyanates is even higher. At the same temperature, the composition of the isocyanate determines the viscosity of the isocyanate, which in turn determines the moving resistance of the isocyanate. During the preparation of artificial boards, a pump is needed to introduce the adhesive, and the pump system usually has a certain normal and safe working pressure. If it is necessary to improve the production efficiency of composite artificial boards, the amount of isocyanate is increased under an unchanged application portion of isocyanate, which requires increasing the delivery amount of the pump for the isocyanate, that is, increasing the operating parameters of the pump. The increase in the delivery amount of isocyanate will result in an increase in the load of the pump system, and the working pressure will increase. Once the safe working pressure is exceeded, the equipment is easily damaged.

The load of the pump system can be reduced in the method for preparing an artificial board according to the present invention with characteristics such as comprising specific isocyanate in the reaction system. The pump system can still operate in a range of normal and safe working pressure even at high rotate speed and high output, thereby improving the production efficiency of the composite artificial boards safely and effectively.

In addition, the isocyanate adhesives in the prior art often adhere to the inner wall of the mixer, which makes it difficult to clean and affects the function and life of the equipment. Unexpectedly, it was found that the isocyanate component of the present invention greatly reduces or even eliminates the wall-adhesion phenomenon, which makes it easier to clean and durably use the related equipment.

### Embodiments

The aspects of the present invention will now be described in detail.

### Components of the reaction system and raw materials for preparing artificial boards Polyisocyanate component

The reaction system used in the method for preparing an artificial board of the present invention may comprise any organic polyisocyanate, including aromatic, aliphatic and alicyclic polyisocyanates and a combination thereof. The polyisocyanate may be represented by the general formula R(NCO)ₙ, where R represents an aliphatic hydrocarbon group containing 2-18 carbon atoms, an aromatic hydrocarbon group containing 6-15 carbon atoms, and an araliphatic hydrocarbon group containing 8-15 carbon atoms, and n=2-4.

Usable polyisocyanates include, preferably but are not limited to, vinylene diisocyanate, tetramethylene 1,4-diisocyanate, hexamethylene diisocyanate (HDI), dodecane-1,2-diisocyanate, cyclobutane-1 ,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenylene-1,3-diisocyanate, hexahydrophenylene-1,4-diisocyanate, perhydrogenated diphenylmethane 2,4-diisocyanate, perhydrogenated diphenylmethane 4,4-diisocyanate, phenylene 1,3-diisocyanate, phenylene 1,4-diisocyanate, stilbene 1,4-diisocyanate, 3,3-dimethyl 4,4-diphenyl diisocyanate, toluene-2,4-diisocyanate (2,4-TDI), toluene-2,6-diisocyanate (2,6-TDI), diphenylmethane-2,4'-diisocyanate (2,4'-MDI), diphenylmethane-2,2'-diisocyanate (2,2'-MDI), diphenylmethane-4,4'-diisocyanate (4,4'-MDI), a mixture of isomers of diphenylmethane diisocyanate and/or diphenylmethane diisocyanate homologues containing more rings, polyphenylpolymethylene polyisocyanate (polymeric MDI), naphthylene-1,5-diisocyanate (NDI), their isomers, any mixture of them and their isomers.

Usable polyisocyanates also include isocyanates modified with carbodiimide and allophanate, preferably, but not limited to, diphenylmethane diisocyanate, carbodiimide modified diphenylmethane diisocyanate, and their isomers, mixtures of them and their isomers.

When used in the present invention, the polyisocyanates may include dimers, trimers, tetramers of the isocyanates, or a combination thereof.

In a preferred embodiment of the present invention, the isocyanate component comprises:
A1) 3.0-20% by weight, preferably 5.0-20% by weight, more preferably 7.0-20% by weight, particularly preferably 8.0-18% by weight of 2,2'-diphenylmethane diisocyanate, based on the total weight of component A);
A2) 26-48% by weight of polycyclic polymeric isocyanate, based on the total weight of component A);
wherein, the viscosity of component A) isocyanate is 50-160 mPa·s, preferably 60-125 mPa·s.

The viscosity of component A) isocyanate of the present invention is preferably 50-160 mPa·s (25°C) , preferably 60-125 mPa·s (25°C).

Preferably, the content of component A) isocyanate is 1-10% by weight, preferably 2.5-7% by weight, based on the total absolute dry weight of the fibers.

Preferably, component A) further comprises 4,4'-diphenylmethane diisocyanate in a content of ≤ 41% by weight, preferably 20-41% by weight, particularly preferably 28-37% by weight, based on the total weight of component A).

Preferably, component A) further comprises 2,4'-diphenylmethane diisocyanate in a content of ≤ 30% by weight, preferably 5-25% by weight, more preferably 10-25% by weight, based on the total weight of component A).

The polycyclic polymeric isocyanate of the present invention refers to a tricyclic or multicyclic isocyanate polymer, and does not include a polymer of diisocyanate. The viscosity of the polycyclic polymeric isocyanate used in the present invention is higher than that of the polymeric isocyanate generally used in the prior art. However, it was found unexpectedly that a reaction system with a lower overall viscosity can be obtained in combination with other isocyanate components of the present invention. Moreover, as mentioned above, the method for preparing an artificial board of the present invention can greatly increase the yield of artificial boards.

### Polyol component

As mentioned above, the reaction system of the present invention may also comprise a polyol. Usable polyol is preferably selected from a variety of polyether polyols and/or mixtures thereof. At least one of the polyether polyols is a glycerin-started polyol. The functionality of the polyether polyols is 2-4, and the hydroxyl number thereof is 20-600, preferably 50-500, particularly preferably 300-400.

The polyether polyols can be prepared by a known process. Usually, it is prepared by mixing ethylene oxide or propylene oxide with ethylene glycol, 1,2-propanediol, 1,3-propanediol, diethylene glycol, glycerol, trimethylolpropane, pentaerythritol, triethanolamine, toluene diamine , sorbitol and sucrose, wherein glycerol or propylene glycol are used as the starter.

In addition, the polyether polyols may also be prepared by reacting at least one olefin oxide containing an alkylene group of 2-4 carbon atoms with a compound containing 2-8, preferably but not limited to, 3-8 active hydrogen atoms or other reactive compounds in the presence of a catalyst.

Examples of the catalyst are alkali metal hydroxides such as sodium hydroxide, potassium hydroxide, or alkali metal alkoxides such as sodium methoxide, sodium ethoxide or potassium ethoxide or potassium isopropoxide.

The useful olefin oxide includes, preferably but is not limited to, tetrahydrofuran, ethylene oxide, 1,2-propylene oxide, 1,2-butylene oxide, 2,3-butylene oxide, styrene oxide, and any mixture thereof.

The useful compound containing active hydrogen atoms includes polyhydroxy compounds, preferably but are not limited to, water, ethylene glycol, 1,2-propanediol, 1,3-propanediol, diethylene glycol, trimethylolpropane, and any mixture thereof, more preferably polyhydric, especially trihydric or polyhydric alcohols, such as glycerol, trimethylolpropane, pentaerythritol, sorbitol and sucrose. The useful compound containing active hydrogen atoms also includes, preferably but is not limited to, organic dicarboxylic acids such as succinic acid, adipic acid, phthalic acid and terephthalic acid, or aromatic or aliphatic substituted diamines such as ethylene diamine, diethylene triamine, triethylene tetramine, propylene diamine, butane diamine, hexamethylene diamine or toluene diamine.

### Catalyst

The reaction system of the present invention may comprise a catalyst. Optional catalysts include, but are not limited to, amine catalysts and alkali metal catalysts. Suitable amine catalyst may be one of triethylamine, tributylamine, triethylene diamine, N-ethyl morpholine, N,N,N',N'-tetramethylethylenediamine, pentamethyldiethylene-triamine, N,N-methylaniline, N,N-dimethylaniline, or a mixture thereof.

The reaction system of the present invention may comprise no catalyst. By repeated experiments, it was unexpectedly found that by using a reaction system comprising isocyanate with a certain viscosity and comprising an appropriate content of 2,2'-diphenylmethane diisocyanate, formaldehyde-free artificial boards with excellent quality can be obtained without using a catalyst for increasing its activity, that is, without a catalyst. Moreover, costs can be saved and the process can be optimized. In addition, the yield and production efficiency of the artificial boards can also be improved.

### Fibers

The fibers of the present invention refer to a substance composed of continuous or discontinuous filaments. The fibers of the present invention are preferably plant fibers. The plant fibers refer to those obtained from plant seeds, fruits, stems, leaves, etc., including those obtained from plant bast such as flax, jute, apocynum, etc., or those obtained from plant leaves such as sisal, abaca, etc. Specifically, they may be from trees, such as basswood, birch, fraxinus mandshurica, beechwood, acer pictum, lauan, or any combination thereof (also called miscellaneous wood or mixed wood), or other plants such as wheat straw, bamboo stalks, shavings, cotton stalks, bagasse and reeds.

### Polyurethane foam

Any available polyurethane foam is suitable for the present invention, preferably polyurethane rigid foam or semi-rigid foam. The polyurethane foam particles comprise recycled polyurethane foam, preferably recycled polyurethane rigid foam, polyurethane flexible foam, polyurethane semi-rigid foam or a combination thereof, and more preferably recycled polyurethane rigid foam. The recycled polyurethane foam refers to the used polyurethane foam, such as the used, replaced or discarded polyurethane foam in refrigerators, freezers, containers, thermal insulation pipes and other similar equipments, which may be polyurethane rigid foam, or polyurethane semi-rigid foam or polyurethane flexible foam. In principle, the present invention may use 100% of polyurethane foam without fibers, resulting in the best thickness expansion rate after water absorption. However, if 100% of polyurethane foam is used, the physical properties may not meet the requirements in certain applications. The method of the present invention comprising a specific content of polyurethane foam can produce an artificial board with particularly excellent quality that meets the requirements in terms of the physical properties and the thickness expansion rate after water absorption, and is simple, efficient, and can recycle waste polyurethane foam, thereby being very environmentally friendly.

Unless indicated otherwise, all technical and scientific terms used herein have the same meaning as commonly understood by those skilled in the art. When the definition of a term herein conflicts with the meanings commonly understood by those skilled in the art, the definition described herein shall apply.

Unless indicated otherwise, all numbers expressing quantities of ingredients, reaction conditions and the like used herein are to be understood as being modified by the wording "about".

The wording "and/or" used herein refers to one or all of the cited elements.

The wording "include" and "comprise" used herein cover the presence of the mentioned elements alone and the presence of other elements not mentioned in addition to the mentioned elements.

All percentages in the present invention are weight percentage, unless otherwise stated.

The present invention is now described by the examples for illustrative purposes and not for limitation.

### Examples

### Description of test items and test methods:

Density refers to the calculated density of the artificial boards sampled for test according to the test method GB/T17657-2013;
Yield refers to the unit yield of the artificial boards, which is calculated as the cumulative value of the volume (m³, cubic meter) of the artificial boards produced per unit time (h, hour);
Internal bonding force refers to the internal bonding strength of the artificial boards according to the test method GB/T17657-2013.

Absolute dry weight refers to the weight of an object (e.g. fibers) after drying (e.g. heating to 100°C or above) for removing the moisture.

### Thickness expansion rate after water absorption refers to the ratio of the measured thickness difference before and after water absorption to the thickness before water immersion, measured according to the standard method (in the present invention referring to GB/T17657-2013) by sampling a certain amount of the artificial board and immersing it into water for a certain period of time (for example, 24 hours).

Viscosity refers to viscosity as measured according to the test method GB/T 12009.3-2009.

### Description of raw materials:

Isocyanate 1: comprising 8.5% by weight of 2,2'-diphenylmethane diisocyanate (2,2'-MDI), 23.3% by weight of 2,4'-diphenylmethane diisocyanate (2,4'-MDI), 30.2% by weight of 4,4'-diphenylmethane diisocyanate (4,4'-MDI), 37.7% by weight of polycyclic polymeric isocyanate, based on the total weight of isocyanate 1, with a viscosity of 80 mPa·s (25°C), available from Covestro Polymers (China) Co., Ltd.;
Isocyanate 2: Desmodur 1520 A 20, comprising 0% of 2,2'-diphenylmethane diisocyanate (2,2'-MDI), 54% by weight of polycyclic polymeric isocyanate, with a viscosity of 205 mPa·s (25°C), available from Covestro Polymers (China) Co., Ltd.;
Polyurethane foam: polyurethane rigid foam recycled from a refrigerator box (the polyurethane raw material obtained from Covestro);
Miscellaneous wood/mixed wood fibers (moisture content of 9%): available from Guangxi Sanwei Forest Products Industry Company;
Rubberwood 1 (moisture content of 3.6% by weight): available from local farmers in Hainan; Rubberwood 2 (moisture content of 13.4% by weight): available from local farmers in Hainan.

### Example 1:

The mixed wood fibers and the polyurethane foam particles were mixed at a ratio in terms of absolute dry weight of 7:3 and placed in a mixer. The isocyanate 1 (wherein the amount of the isocyanate added was 6% by weight, based on the absolute dry weight of the fibers and the polyurethane foam) was introduced into the mixer at a speed of 1.2-25 kg/min under a pressure of 1.65-1.85 bar by a pump. The mixture was subjected to air-atomizing spray. The mixed mass was taken out and introduced into a mold at the same speed as the foregoing. The mold was heated to 195°C, and the hot pressing time was 112 seconds. The artificial board was obtained upon the isocyanate being cured. The obtained artificial board had a thickness of 8 mm. The test data were shown in Table 1 and Table 2.

### Comparative Example 1:

The mixed wood fibers were placed in a mixer. The isocyanate 1 (wherein the amount of the isocyanate added was 6% by weight, based on the absolute dry weight of the fibers) was introduced into the mixer at a speed of 1.2-25 kg/min under a pressure of 1.65-1.85 bar by a pump. The mixture was subjected to air-atomizing spray. The mixed mass was taken out and introduced into a mold at the same speed as the foregoing. The mold was heated to 195°C, and the hot pressing time was 112 seconds. The artificial board was obtained upon the isocyanate being cured. The obtained artificial board had a thickness of 8 mm. The test data were shown in Table 1.

The difference between Comparative Example 1 and Example 1 is that only the mixed wood fibers were used without polyurethane foam.

**Table 1-Test results of Example 1 and Comparative Example 1**

| | Density (kg/m³) | | Thickness expansion rate after water absorption (24h) | |
|---|---|---|---|---|
| Comparative Example 1 | | 780 | | 11.3% |
| Example 1 | | 796 | | 6.3% |

**Table 2-Test results of the physical properties of Example 1**

| | | | |
|---|---|---|---|
| Examples 1 | Static bending strength | Elastic modulus | Internal bonding strength |
| | 34 MPa | 2510 MPa | 1.03 MPa |

From the data in Table 1 as above, it can be seen that the thickness expansion rate after water absorption of the artificial board of Example 1 was significantly lower than that of Comparative Example 1. The density and other physical properties of Example 1 also met the requirements, and the quality was superior.

## Claims

1. A method for preparing an artificial board, comprising preparing the artificial board by mixing fibers, polyurethane foam particles and a reaction system comprising component A) isocyanate,
wherein the absolute dry weight of the polyurethane foam particles is 3-80% by weight, preferably 4-75% by weight, more preferably 5-70% by weight, particularly preferably 5-60% by weight, based on the total absolute dry weight of the fibers and the polyurethane foam particles.

2. The method according to claim 1, wherein the polyurethane foam comprises recycled polyurethane foam, preferably recycled polyurethane rigid foam, polyurethane flexible foam, polyurethane semi-rigid foam or a combination thereof, and more preferably recycled polyurethane rigid foam.

3. The method according to claim 1 or 2,wherein the content of component A) isocyanate is 1-20% by weight, preferably 1-15% by weight, more preferably 1-10% by weight, based on the total absolute dry weight of the fibers and the polyurethane foam particles.

4. The method according to any one of claims 1 to 3, wherein the fibers are selected from plant fibers with a water content of 3-40% by weight, preferably 3-30% by weight, more preferably 3-25% by weight, based on the total absolute dry weight of the plant fibers.

5. The method according to any one of claims 1 to 4, wherein the thickness expansion rate after water absorption for 24 hours of the artificial board is ≤ 11%, preferably ≤ 10%, more preferably ≤ 9% (the test method referring to GB/T17657-2013).

6. The method according to any one of claims 1 to 5, wherein the thickness expansion rate after water absorption for 24 hours of the artificial board comprising the polyurethane foam particles is reduced by ≥ 20%, preferably ≥ 30 %, more preferably ≥ 35% (the test method referring to GB/T17657-2013), compared with that of the artificial board without the polyurethane foam particles.

7. The method according to any one of claims 1 to 6, wherein component A) isocyanate comprises:
A1) 3.0-20% by weight, preferably 5.0-20% by weight, more preferably 7.0-20% by weight, particularly preferably 8.0-18% by weight of 2,2'-diphenylmethane diisocyanate, based on the total weight of component A);
A2) 26-48% by weight of polycyclic polymeric isocyanate, based on the total weight of component A);
wherein the viscosity of component A) isocyanate at 25°C is 50-160 mPa·s, preferably 60-150 mPa·s (the test method referring to GB/T 12009.3-2009).

8. The method according to any one of claims 1 to 7, wherein the method comprises a step of introducing the reaction system into a mold at an introduction speed of 1.2-25 kg/min, preferably 1.5-20 kg/min (the test method referring to the measurement by mass flow meter).

9. The method according to any one of claims 1 to 8, wherein component A) isocyanate comprises 4,4'-diphenylmethane diisocyanate in a content of ≤ 41% by weight, preferably 20-41% by weight, particularly preferably 28-37% by weight, based on the total weight of component A).

10. The method according to any one of claims 1 to 9, wherein component A) isocyanate comprises 2,4'-diphenylmethane diisocyanate in a content of ≤ 30% by weight, preferably 1-25% by weight, based on the total weight of component A).

11. An artificial board prepared by the method for preparing an artificial board according to any one of claims 1 to 10.

12. The artificial board according to claim 11, wherein the thickness expansion rate after water absorption for 24 hours of the artificial board is ≤ 11%, preferably ≤ 10%, more preferably ≤ 9% (the test method referring to GB/T17657-2013).

13. The artificial board according to claim 11 or 12, wherein the thickness expansion rate after water absorption for 24 hours rate of the artificial board comprising the polyurethane foam particles is reduced by ≥ 20%, preferably ≥ 30 %, more preferably ≥ 35% (the test method referring to GB/T17657-2013), compared with that of an identical artificial board without the polyurethane foam particles.

14. The artificial board according to any one of claims 11 to 13, wherein the density of the artificial board is 480-1400 kg/m³, preferably 500-860 kg/m³(the test method referring to GB/T17657-2013).

15. An artificial board product comprising the artificial board according to any one of claims 11-14, wherein the artificial board product is selected from wardrobes, office desks and chairs, bed boards, sofas, cupboards, bathroom cabinets, pool tables and ping pong tables.

## Patentansprüche

1. Verfahren zur Herstellung einer künstlichen Platte, umfassend Herstellen der künstlichen Platte durch Mischen von Fasern, Polyurethanschaumstoffpartikeln und einem Reaktionssystem umfassend Komponente A) Isocyanat, wobei das absolute Trockengewicht der Polyurethanschaumstoffpartikel 3-80 Gew.-%, vorzugsweise 4-75 Gew.-%, bevorzugter 5-70 Gew.-%, besonders bevorzugt 5-60 Gew.-%, bezogen auf das gesamte absolute Trockengewicht der Fasern und der Polyurethanschaumstoffpartikel beträgt.

2. Verfahren gemäß Anspruch 1, wobei der Polyurethanschaumstoff recycelten Polyurethanschaumstoff, vorzugsweise recycelten Polyurethanhartschaumstoff, Polyurethanweichschaumstoff, halbharten Polyurethanschaumstoff oder eine Kombination davon umfasst, und bevorzugter recycelten Polyurethanhartschaumstoff.

3. Verfahren gemäß Anspruch 1 oder 2, wobei der Gehalt an Komponente A) Isocyanat 1-20 Gew.-%, vorzugsweise 1-15 Gew.-%, bevorzugter 1-10 Gew.-%, bezogen auf das gesamte absolute Trockengewicht der Fasern und der Polyurethanschaumstoffpartikel beträgt.

4. Verfahren gemäß einem der Ansprüche 1 bis 3, wobei die Fasern ausgewählt sind aus Pflanzenfasern mit einem Wassergehalt von 3-40 Gew.-%, vorzugsweise 3-30 Gew.-%, bevorzugter 3-25 Gew.-%, bezogen auf das gesamte absolute Trockengewicht der Pflanzenfasern.

5. Verfahren gemäß einem der Ansprüche 1 bis 4, wobei die Dickenexpansionsrate nach 24 Stunden langer Wasserabsorption der künstlichen Platte ≤ 11 % beträgt, vorzugsweise ≤ 10 %, bevorzugter ≤ 9 % (das Prüfverfahren ist gemäß GB/T17657-2013).

6. Verfahren gemäß einem der Ansprüche 1 bis 5, wobei die Dickenexpansionsrate nach 24 Stunden langer Wasserabsorption der künstlichen Platte, die die Polyurethanschaumstoffpartikel umfasst, um ≥ 20 %, vorzugsweise ≥ 30 %, bevorzugter ≥ 35 % (das Prüfverfahren ist gemäß GB/T17657-2013) im Vergleich zu der künstlichen Platte ohne die Polyurethanschaumstoffpartikel verringert ist.

7. Verfahren gemäß einem der Ansprüche 1 bis 6, wobei Komponente A) Isocyanat umfasst:
A1) 3,0-20 Gew.-%, vorzugsweise 5,0-20 Gew.-%, bevorzugter 7,0-20 Gew.-%, besonders bevorzugt 8,0-18 Gew.-% 2,2'-Diphenylmethandiisocyanat bezogen auf das Gesamtgewicht von Komponente A);
A2) 26-48 Gew.-% polycyclisches polymeres Isocyanat bezogen auf das Gesamtgewicht von Komponente A);
wobei die Viskosität von Komponente A) Isocyanat bei 25 °C 50-160 mPa·s beträgt, vorzugsweise 60-150 mPa·s (das Prüfverfahren ist gemäß GB/T 12009.3-2009).

8. Verfahren gemäß einem der Ansprüche 1 bis 7, wobei das Verfahren einen Schritt des Einführens des Reaktionssystems in ein Formwerkzeug mit einer Einführgeschwindigkeit von 1,2-25 kg/min, vorzugsweise 1,5-20 kg/min, umfasst (das Prüfverfahren ist Messung durch Massendurchflussmesser).

9. Verfahren gemäß einem der Ansprüche 1 bis 8, wobei Komponente A) Isocyanat 4,4'-Diphenylmethandiisocyanat in einem Gehalt von ≤ 41 Gew.-%, vorzugsweise 20-41 Gew.-%, besonders bevorzugt 28-37 Gew.-%, bezogen auf das Gesamtgewicht von Komponente A) umfasst.

10. Verfahren gemäß einem der Ansprüche 1 bis 9, wobei Komponente A) Isocyanat 2,4'-Diphenylmethandiisocyanat in einem Gehalt von ≤ 30 Gew.-%, vorzugsweise 1-25 Gew.-%, bezogen auf das Gesamtgewicht von Komponente A) umfasst.

11. Künstliche Platte, hergestellt durch das Verfahren zur Herstellung einer künstlichen Platte gemäß einem der Ansprüche 1 bis 10.

12. Künstliche Platte gemäß Anspruch 11, wobei die Dickenexpansionsrate nach 24 Stunden langer Wasserabsorption der künstlichen Platte ≤ 11 % beträgt, vorzugsweise ≤ 10 %, bevorzugter ≤ 9 % (das Prüfverfahren ist gemäß GB/T17657-2013).

13. Künstliche Platte gemäß Anspruch 11 oder 12, wobei die Dickenexpansionsrate nach 24 Stunden langer Wasserabsorption der künstlichen Platte, die die Polyurethanschaumstoffpartikel umfasst, um ≥ 20 %, vorzugsweise ≥ 30 %, bevorzugter ≥ 35 % (das Prüfverfahren ist gemäß GB/T17657-2013) im Vergleich zu jener einer identischen künstlichen Platte ohne die Polyurethanschaumstoffpartikel verringert ist.

14. Künstliche Platte gemäß einem der Ansprüche 11 bis 13, wobei die Dichte der künstlichen Platte 480-1400 kg/m³, vorzugsweise 500-860 kg/m³, beträgt (das Prüfverfahren ist gemäß GB/T17657-2013).

15. Künstliches Plattenprodukt, umfassend die künstliche Platte gemäß einem der Ansprüche 11-14, wobei das künstliche Plattenprodukt ausgewählt ist aus Kleiderschränken, Bürotischen und -stühlen, Bettgestellen, Sofas, Küchenschränken, Badezimmerschränken, Billardtischen und Tischtennistischen.

## Revendications

1. Procédé pour la fabrication d'un panneau artificiel, comprenant la préparation d'un panneau artificiel en mélangeant des fibres, des particules de mousse de polyuréthane et un système de réaction comprenant un composant A) isocyanate,
le poids sec absolu des particules de mousse de polyuréthane étant de 3 à 80 % en poids, préférablement de 4 à 75 % en poids, plus préférablement de 5 à 70 % en poids, particulièrement préférablement de 5 à 60 % en poids, sur la base du poids sec absolu total des fibres et des particules de mousse de polyuréthane.

2. Procédé selon la revendication 1, la mousse de polyuréthane comprenant une mousse de polyuréthane recyclé, préférablement une mousse rigide de polyuréthane recyclé, une mousse flexible de polyuréthane recyclé, mousse semi-rigide de polyuréthane recyclé ou une combinaison correspondante, et plus préférablement une mousse rigide de polyuréthane recyclé.

3. Procédé selon la revendication 1 ou 2, la teneur du composant A) isocyanate étant de 1 à 20 % en poids, préférablement 1 à 15 % en poids, plus préférablement 1 à 10 % en poids, sur la base du poids sec absolu total des fibres et des particules de mousse de polyuréthane.

4. Procédé selon l'une quelconque des revendications 1 à 3, les fibres étant choisies parmi des fibres végétales dotées d'une teneur en eau de 3 à 40 % en poids, préférablement 3 à 30 % en poids, plus préférablement 3 à 25 % en poids, sur la base du poids sec absolu total des fibres végétales.

5. Procédé selon l'une quelconque des revendications 1 à 4, le taux d'expansion de l'épaisseur après une absorption d'eau pendant 24 heures du panneau artificiel étant ≤ 11 %, préférablement ≤ 10 %, plus préférablement ≤ 9 % (le procédé de test faisant référence à la norme GB/T17657-2013) .

6. Procédé selon l'une quelconque des revendications 1 à 5, le taux d'expansion de l'épaisseur après une absorption d'eau pendant 24 heures du panneau artificiel comprenant les particules de mousse de polyuréthane étant réduit de ≥ 20 %, préférablement ≥ 30 %, plus préférablement ≥ 35% (le procédé de test faisant référence à la norme GB/T17657-2013), par comparaison avec celui du panneau artificiel sans les particules de mousse de polyuréthane.

7. Procédé selon l'une quelconque des revendications 1 à 6, le composant A) isocyanate comprenant :
A1) 3,0 à 20 % en poids, préférablement 5,0 à 20 % en poids, plus préférablement 7,0 à 20 % en poids, particulièrement préférablement 8,0 à 18 % en poids de 2,2'-diisocyanate de diphénylméthane, sur la base du poids total du composant A) ;
A2) 26 à 48 % en poids d'un isocyanate polymérique polycyclique, sur la base du poids total du composant A) ;
la viscosité du composant A) isocyanate à 25 °C étant de 50-160 mPa·s, préférablement de 60-150 mPa·s (le procédé de test faisant référence à la norme GB/T 12009.3-2009).

8. Procédé selon l'une quelconque des revendications 1 à 7, le procédé comprenant une étape d'introduction du système de réaction dans un moule à une vitesse d'introduction de 1,2 à 25 kg/min, préférablement de 1,5 à 20 kg/min (le procédé de test faisant référence à la mesure par un débitmètre massique).

9. Procédé selon l'une quelconque des revendications 1 à 8, le composant A) isocyanate comprenant du 4,4'-diisocyanate de diphénylméthane en une teneur de ≤ 41 % en poids, préférablement de 20 à 41 % en poids, particulièrement préférablement de 28 à 37 % en poids, sur la base du poids total du composant A).

10. Procédé selon l'une quelconque des revendications 1 à 9, le composant A) isocyanate comprenant du 2,4'-diisocyanate de diphénylméthane en une teneur de ≤ 30 % en poids, préférablement de 1 à 25 % en poids, sur la base du poids total du composant A).

11. Panneau artificiel préparé par le procédé pour la préparation d'un panneau artificiel selon l'une quelconque des revendications 1 à 10.

12. Panneau artificiel selon la revendication 11, le taux d'expansion de l'épaisseur après une absorption d'eau pendant 24 heures du panneau artificiel étant ≤ 11 %, préférablement ≤ 10 %, plus préférablement ≤ 9 % (le procédé de test faisant référence à la norme GB/T17657-2013) .

13. Panneau artificiel selon la revendication 11 ou 12, le taux d'expansion de l'épaisseur après une absorption d'eau pendant 24 heures du panneau artificiel comprenant les particules de mousse de polyuréthane étant réduit de ≥ 20 %, préférablement ≥ 30 %, plus préférablement ≥ 35% (le procédé de test faisant référence à la norme GB/T17657-2013), par comparaison avec celui d'un panneau artificiel sans les particules de mousse de polyuréthane.

14. Panneau artificiel selon l'une quelconque des revendications 11 à 13, la densité du panneau artificiel étant de 480-1 400 kg/m³, préférablement de 500-860 kg/m³ (le procédé de test faisant référence à la norme GB/T17657-2013) .

15. Produit de panneau artificiel comprenant le panneau artificiel selon l'une quelconque des revendications 11 à 14, le produit de panneau artificiel étant choisi parmi les armoires, les bureaux et les chaises de bureau, les sommiers, les canapés, les armoires, les armoires de salle de bains, les tables de billard et les tables de ping-pong.
